# EUROPÄISCHE PATENTANMELDUNG

(11) **EP 2 460 692 A2**
(43) Veröffentlichungstag der Anmeldung: **06.06.2012**
(21) Anmeldenummer: 11009410.9
(22) Anmeldetag: 28.11.2011
(51) Int. Cl.: B60R 9/10, B60D 1/06

(54) **Lastenträger mit einer angetriebenen Befestigungseinrichtung**

(30) Priorität: 01.12.2010 DE 102010052885
(71) Anmelder: WESTFALIA - Automotive GmbH, 33378 Rheda-Wiedenbrück (DE)
(72) Erfinder: Hermbusch, Gerhard, 33449 Langenberg (DE); Wyrwich, MArtin, 33378 Rheda-Wiedenbrück (DE)
(74) Vertreter: Bregenzer, Michael

(57) **Zusammenfassung**

Die Erfindung betrifft einen Lastenträger (10a-10c) für ein Fahrzeug, insbesondere einen Personenkraftwagen, mit einer Tragbasis zum Tragen einer Last, und mit einer Befestigungseinrichtung (16a-16d) zum lösbaren Befestigen an einem Widerhalt, insbesondere einer Anhängekupplung, des Kraftfahrzeugs, wobei die Befestigungseinrichtung (16a-16d) mindestens ein Halteglied (61a-61d) aufweist, das zwischen einer zum Halten an dem Widerhalt vorgesehenen Haltestellung, und einer zum Entfernen der Befestigungseinrichtung (16a-16d) von dem Widerhalt vorgesehenen Freigabestellung verstellbar ist. Bei dem Lastenträger (10a-10c) ist vorgesehen, dass die Befestigungseinrichtung (16a-16d) mindestens einen mit einem Antriebsschalter (42) schaltbaren elektrischen oder fluidischen Halteantrieb (60a-60d) zum Antreiben des mindestens einen Halteglieds (61a-61d) aufweist.

## Beschreibung

Die Erfindung betrifft einen Lastenträger für ein Fahrzeug, insbesondere einen Personenkraftwagen, mit einer Tragbasis zum Tragen einer Last, und mit einer Befestigungseinrichtung zum lösbaren Befestigen an einem Widerhalt, insbesondere einer Anhängekupplung, des Kraftfahrzeugs, wobei die Befestigungseinrichtung mindestens ein Halteglied aufweist, das zwischen einer zum Halten an dem Widerhalt vorgesehenen Haltestellung, und einer zum Entfernen der Befestigungseinrichtung von dem Widerhalt vorgesehenen Freigabestellung verstellbar ist

Lastenträger, die an einem Heck eines Kraftfahrzeuges lösbar befestigbar sind, beispielsweise in eine Steckaufnahme einsteckbar oder an einer Anhängekupplung befestigbar sind, sind allgemein bekannt. Bei Nichtgebrauch können die Lastenträger vom Fahrzeug entfernt werden, so dass für die Beförderung des Lastenträgers am Fahrzeug kein Bauraum notwendig ist und zudem auch Gewicht eingespart wird, was den Kraftstoffverbrauch senkt.

Zur Befestigung derartiger Lastenträger sind verschiedenartige Konzepte bekannt. Beispielsweise geht eine Lastenträger-Kupplung, also eine Befestigungseinrichtung im Sinne des Oberbegriffes des Anspruches 1, aus der DE 10 2008 047 110 A1 hervor. Die Bedienung ist allerdings umständlich, insbesondere dann, wenn der Lastenträger ein relativ großes Format, z.B. zum Beladen mit drei oder mehr Fahrrädern, hat. Der Bediener kann den Spannhebel dann kaum oder nur schwer erreichen, was die Handhabung erschwert.

Es ist daher die Aufgabe der vorliegenden Erfindung, einen bequem handhabbaren Lastenträger bereitzustellen.

Zur Lösung der Aufgabe ist bei einem Lastenträger der eingangs genannten Art vorgesehen, dass die Befestigungseinrichtung mindestens einen mit einem Antriebsschalter schaltbaren elektrischen oder fluidischen Halteantrieb zum Antreiben des mindestens einen Halteglieds aufweist.

Die Erfindung betrifft ferner eine Lastenträger-Kupplung oder eine Befestigungseinrichtung für einen Lastenträger. Die Befestigungseinrichtung kann die unten beschriebenen Antriebsschalter, Sensoren, eine Steuerung oder dergleichen umfassen und vorzugsweise als ein Modul ausgestaltet sein, das an einem Lastenträger oder einem Fahrzeug befestigt werden kann.

Der erfindungsgemäße Gedanke ist es also, dass ein motorischer Antrieb, also ein Halteantrieb mit Motor, zum Antreiben des einen Halteglieds oder mehrerer Halteglieder vorhanden ist. Eine manuelle Betätigung wäre zwar prinzipiell möglich, beispielsweise als Notbetätigung, wobei dies vorteilhaft nur eine zusätzliche, optionale Maßnahme darstellt.

Bei der Befestigungseinrichtung ist vorgesehen, dass beispielsweise der Antriebsmotor am Lastenträger, d.h. am vom Kraftfahrzeug entfernbaren Bauteil angeordnet ist. Es ist aber auch möglich, dass ein Halteantrieb der Befestigungseinrichtung fahrzeugseitig montiert ist, d.h. also am Fahrzeug verbleibt, während der Lastenträger sozusagen das passive Bauteil darstellt. Selbstverständlich ist es auch möglich, dass an beiden Teilen, nämlich am Fahrzeug und am Lastenträger jeweils mindestens ein Halteantrieb der Befestigungseinrichtung vorgesehen ist.

Sämtliche nachfolgend im Zusammenhang mit dem Lastenträger beschriebenen Maßnahmen können selbstverständlich auch bei der erfindungsgemäßen Lastenträgerkupplung vorgesehen sein, so zum Beispiel dass das Halteglied durch Federkraft in die Freigabestellung oder die Haltestellung vorgespannt ist, dass der Halteantrieb mehrfach bestromt wird, um die Haltekraft immer wieder neu zu vergrößern oder dergleichen. Auch das Steuerungskonzept, das nachfolgend noch erläutert wird, ist selbstverständlich bei der Lastenträgerkupplung unabhängig davon realisierbar, ob ein jeweiliger Halteantrieb am vom Fahrzeug lösbaren Bauteil, dem Lastenträger, oder am Fahrzeug vorgesehen ist.

Es versteht sich, dass das Konzept gemäß der Erfindung sowohl bei an einer Anhängekupplung befestigbaren Befestigungseinrichtungen oder damit ausgestatteten Lastenträgern zum Einsatz kommen kann, aber auch bei einer Lastenträgerkupplung oder einer Befestigungseinrichtung, die beispielsweise an einer Halterung des Fahrzeuges montiert, z.B. an eine Steckaufnahme oder an eine Steckaufnahmenanordnung angesteckt oder auf Steckvorsprünge am Fahrzeug aufgesteckt, werden kann. Mithin kann also die Befestigung, insbesondere die Verriegelung und Verklemmung, auch bei solchen Heckträgern motorisch geschehen. Weiterhin ist es im Sinne der Erfindung, dass nicht nur am Lastenträger selbst der Antrieb vorhanden sein kann, sondern auch beispielsweise an der fahrzeugseitigen Halterung oder Befestigungskomponente, beispielsweise einer Steckaufnahme. Die fahrzeugseitige Halterung kann mit einem Halteglied versehen sein, das erfindungsgemäß motorisch antreibbar ist.

Das mindestens eine Halteglied ist zweckmäßigerweise durch eine Federanordnung in die Haltestellung oder die Freigabestellung belastet. Somit wirkt der Halteantrieb beispielsweise entgegen der Kraft der Federanordnung im Sinne beispielsweise eines Lösens der Halteeinrichtung oder der Befestigungseinrichtung. Eine Federanordnung stellt insbesondere bei einer Störung oder einem Ausfall des Halteantriebs eine Sicherheit dar. Der Halteantrieb muss nur beim Montieren oder Demontieren der Befestigungseinrichtung betätigt werden bzw. auf das Halteglied wirken.

Es versteht sich, dass das Halteglied bei einer erfindungsgemäßen Lastenträger-Kupplung bzw. bei einem erfindungsgemäßen Lastenträger beispielsweise auch einen Zuganker, Haken oder dergleichen umfassen kann, der motorisch angetrieben wird.

Bevorzugt ist es, dass das Halteglied ein Formschlussglied umfasst, insbesondere einen Klemmkörper. Der Widerhalt, beispielsweise ein Kuppelkörper, der kugelig sein oder auch eine sonstige Geometrie aufweisen kann, ist dann zwischen den Klemmkörper und den Widerlagerkörper klemmbar. Beispielsweise kann der Kuppelkörper einen Bestandteil einer Anhängekupplung bilden. Bevorzugt ist als Kuppelkörper eine Kupplungskugel, das heißt ein kugeliger Widerhalt.

Der Klemmkörper und der Widerlagerkörper sind zweckmäßigerweise also zum Klemmen einer Kupplungskugel ausgestaltet. Bevorzugt ist eine Klemmung im Äquatorialbereich. Weiterhin ist es vorteilhaft, wenn die Befestigungseinrichtung eine Stütze aufweist, mit der sie sich unmittelbar am Kuppelkörper, insbesondere der Kupplungskugel abstützen kann. Bevorzugt ist die Stütze so ausgestaltet und/oder angeordnet, dass sie sich oben an der bei einer Normkupplungskugel vorhandenen Abflachung abstützen kann. Somit ist ein einfaches Ausrichten des Lastenträgers bzw. der Befestigungseinrichtung an der ansonsten kugeligen Klemmfläche möglich.

Der Antriebsschalter kann beispielsweise ein Tastschalter sein. Bevorzugt umfasst der Antriebsschalter nicht nur einen, sondern mehrere Schalter. Beispielsweise kann ein Bediener einen Druckschalter betätigen, der dann als Antriebsschalter wirkt. Allerdings ist es z.B. aus Gründen der Sicherheit oder des Komforts möglich, dass mehrere Antriebsschalter, z.B. Bediener-Antriebsschalter und/oder Sensoren, betätigt sein müssen oder ein entsprechendes Betätigungssignal ausgeben müssen, um den Halteantrieb zu schalten.

Der Antriebsschalter kann aber auch ein Sensor sein oder einen Sensor umfassen, beispielsweise ein Abstandsensor, ein optischer Sensor oder dergleichen. Selbstverständlich können auch mehrere derartige Sensoren vorhanden sein. Bevorzugt umfasst der Antriebsschalter nämlich mindestens einen durch den Widerhalt betätigbaren Sensor, beispielsweise zwei oder mehr Sensoren, die einen Abstand zum Widerhalt, z.B. dem Kuppelkörper oder einer Steckaufnahme oder einem Steckvorsprung, messen können. Somit ist der Halteantrieb in Abhängigkeit von einem Abstand des jeweiligen Sensors von dem Widerhalt schaltbar.

Eine solche Sensoranordnung, die beispielsweise zwei oder mehr Sensoren umfasst, kann auch zur Ausrichtung der Befestigungseinrichtung am Kuppelkörper bzw. am Widerhalt genutzt werden. Wenn beispielsweise die als Antriebsschalter wirkenden oder mit dem Antriebsschalter zusammenwirkenden Sensoren denselben oder einen jeweils vorbestimmten Abstand zum Widerhalt messen, also z.B. eine Parallelität beispielsweise zur Abflachung an der Oberseite der Normkupplungskugel vorhanden ist, wird der Halteantrieb in Richtung seiner Haltestellung betätigt. Ist dies nicht der Fall, das heißt dass die Befestigungseinrichtung eine Schräglage einnimmt, messen dies die Sensoren und schalten den Halteantrieb ab.

Weiterhin ist es zweckmäßig, dass der Antriebsschalter beispielsweise auch einen oder mehrere Bedienersensoren umfasst, beispielsweise Abstandssensoren, optische Sensoren oder dergleichen. Der mindestens eine Bedienersensor kann beispielsweise den Bediener selbst oder eine Bedienhandlung eines Bedieners erfassen. Wenn sich also beispielsweise ein Bediener im Nahbereich des Lastenträgers befindet, diesen also z.B. stützt oder hält, wird dadurch der Halteantrieb beispielsweise schaltbar oder geschaltet. Es ist auch möglich, dass der Bediener eine vorbestimmte Bedienhandlung an dem Abstandssensor vornimmt, beispielsweise seine Hand vor diesem schwenkt, um somit den Halteantrieb einzuschalten.

Der Halteantrieb kann zweckmäßigerweise ein Spanngetriebe aufweisen oder auch ein Klemmgetriebe. Es ist also möglich, dass zwischen dem Halteglied und dem Halteantrieb ein Spanngetriebe und/oder Klemmgetriebe vorhanden ist. Das Getriebe ist vorzugsweise ein Übersetzungsgetriebe, so dass die Kraft des Halteantriebs bzw. eines Motors des Halteantriebs verstärkt wird, wenn sich dieser bewegt.

Selbstverständlich kann der Halteantrieb ein Drehantrieb sein oder auch ein Linearantrieb.

Weiterhin ist es möglich, dass zwischen dem Halteantrieb-Motor und dem Halteglied beispielsweise auch ein Seilzug vorhanden ist. Selbstverständlich könnte auch eine Zahnriemenanordnung vorgesehen sein. Mithin kann also ein Übertragungsgetriebe zwischen dem Motor des Halteantriebs und dem Halteglied vorhanden sein, so dass eine größere Entfernung zwischen dem Motor des Halteantriebs und dem Halteglied möglich ist. Das Übertragungsgetriebe kann beispielsweise eine Stange, einen Seilzug, einen Bowdenzug oder dergleichen umfassen.

Das Halteglied kann in einer bevorzugten Ausführungsform einen Riegel umfassen. Die Befestigungseinrichtung könnte man dann auch als Verriegelungseinrichtung bezeichnen. Es versteht sich, dass auch mehrere Riegel vorgesehen sein können.

Eine weitere Variante der Erfindung sieht vor, dass das Halteglied ein Formschlussglied umfasst, das zu einem Formschluss mit einer Formschlussgegenkontur am Widerhalt, z.B. einem Kuppelkörper oder einer Kupplungskugel, einer Steckaufnahme oder dergleichen, ausgestaltet ist. Wenn das Formschlussglied formschlüssig in die Formschlussgegenkontur eingreift bzw. mit dieser in formschlüssigem Eingriff ist, wird dadurch der Halt Befestigungseinrichtung am Widerhalt bewirkt.

Aber auch ein Verklemmen oder Verspannen des Lastenträgers am Widerhalt ist möglich, so dass dieser bezüglich des Fahrzeugs verspannt bzw. verklemmt ist. In diesem Fall umfasst das Halteglied beispielsweise ein Spannelement.

Ein weiterer innovativer Gedanke, sieht vor, dass das Halteglied sowohl zum Verriegeln, als auch zum Spannen und/oder Klemmen ausgestaltet ist. Beispielsweise hat das Halteglied in dieser Ausgestaltung der Erfindung eine Riegelfläche und eine Spannfläche und/oder Klemmfläche. Die Riegelfläche oder die Spannfläche sind bezogen auf die Verriegelungsbewegung oder Entriegelungsbewegung des mindestens einen Halteglieds benachbart zueinander, z.B. nebeneinander angeordnet. Sie wirken mit einer Verriegelungsgegenkontur und einer Klemmgegenkontur bzw. Spanngegenkontur zusammen. Bei der Verriegelungsbewegung läuft die Kinematik nun so ab, dass zunächst die Riegelfläche und die Verriegelungsgegenkontur in Eingriff miteinander gelangen oder zumindest nebeneinander angeordnet sind, dann erst die Spannfläche mit der Spanngegenkontur oder die Klemmfläche mit der Klemmgegenkontur in Eingriff gelangen. Somit kann also das Halteglied zunächst eine Verriegelung des Lastenträgers und anschließend eine Verklemmung bewirken. Somit ist ein "klapperfreier" Fahrbetrieb möglich.

Das Entriegeln bzw. Entspannen verläuft sinngemäß umgekehrt, so dass das Halteglied zunächst die Verspannung oder Verklemmung aufhebt, anschließend die Verriegelung.

Bevorzugt ist eine Steuerung für den Halteantrieb vorgesehen.

Die Steuerung kann beispielsweise so ausgestaltet sein, dass sie den Halteantrieb periodisch wiederholt mit Energie versorgt, beispielsweise bestromt oder fluidtechnisch ansteuert, wobei diese Energieversorgung von einer vorigen Betätigung durch den Antriebsschalter abhängt. Wird also der Halteantrieb durch den Antriebsschalter in Richtung der Haltestellung betätigt, taktet die Steuerung sozusagen nach und beaufschlagt den Halteantrieb immer wieder in Richtung der Haltestellung. Dadurch wird einem unbeabsichtigten Lösen des Halteglieds vorgebeugt. Auch das umgekehrte ist möglich, dass nämlich die Steuerung den Halteantrieb in Richtung der Freigabestellung periodisch mit Energie versorgt, wenn zuvor von einem Bediener der Befehl zum Schalten in Richtung der Freigabestellung gegeben worden ist.

Bevorzugt ist es, wenn der Lastenträger einen Empfänger zur drahtlosen Ansteuerung des Antriebsschalters aufweist. Somit kann also der Antriebsschalter drahtlos angesteuert werden, z.B. mit einer Fernbedienung, die ansonsten zur Verriegelung oder zum Öffnen des Fahrzeuges (Zentralverriegelung) vorgesehen ist.

Bevorzugt hat der Empfänger einen sehr kurzen, begrenzten Empfangsbereich. Dieser kann beispielsweise nur 50 bis 200cm betragen. Bevorzugt ist der Empfänger zur Anordnung am Heck des Kraftfahrzeuges ausgestaltet bzw. vorgesehen. Alle vorgenannten Maßnahmen haben den Vorteil, dass die Befestigungseinrichtung nur dann in die Freigabestellung verstellt werden kann, wenn sich ein Bediener in der Nähe des Lastenträgers befindet. Auch dies hat den Vorteil, dass der Lastenträger nicht unkontrolliert vom Fahrzeug entfernt werden kann, unter anderem als Diebstahlsicherung.

Der Lastenträger hat zweckmäßigerweise eine Steuerung zur Aktivschaltung und/oder Deaktivierung des Halteantriebs oder auch des mindestens einen Antriebsschalters anhand mindestens einer Aktivierungsbedingung, die man im Falle der Deaktivierung auch als Deaktivierungsbedingung bezeichnen kann.

Die Steuerung kann so ausgestaltet sein, dass sie den Antriebsschalter oder den Halteantrieb anhand der mindestens einen Aktivierungsbedingung für ein Zeitintervall aktiv schaltet oder deaktiviert. Somit ist es beispielsweise nur während dieses aktiven Zeitintervalles möglich, dass ein Bediener den Antriebsschalter betätigt, der beispielsweise im Heckbereich des Fahrzeuges oder am Lastenträger angeordnet ist.

Der Lastenträger ist zweckmäßigerweise über elektrische Kontakte mit einem Bordnetz des Fahrzeugs verbindbar, z.B. zur Stromversorgung und/oder zu Steuerungszwecken. Beispielsweise hat der Lastenträger einen Stecker zum Einstecken in eine Anhängersteckdose. Vorzugsweise hat der Lastenträger einen Buskoppler zum Empfangen von Bussignalen von dem Bordnetz.

Vorzugsweise umfasst die Steuerung zur Betätigung des elektrischen Antriebsschalters ein Betätigungselement mit einem in einem Außenbereich des Fahrzeugs angeordneten Bedienbereich nahe bei dem Lastenträger oder am Lastenträger selbst, insbesondere in einem zum Ergreifen des Lastenträgers vorgesehenen Griffbereich. Somit ist das Betätigungselement am oder nahe beim Lastenträger bedienbar, so dass der Bediener beispielsweise gleichzeitig den Lastenträger ergreifen und den Antriebsschalter betätigen kann.

Die Steuerung umfasst weiterhin zweckmäßigerweise einen Sensoreingang und/oder einen Sensor und ist zur Auswertung eines Sensorsignals des Sensors als Aktivierungsbedingung ausgeschaltet, z.B. eines der vorher erläuterten Abstandssensoren.

Eine weitere Aktivierungsbedingung, die der Lastenträger über das Bordnetz des Fahrzeugs empfangen kann, kann auch der Stillstand eines Fahrzeug-Motors des Fahrzeugs sein, so dass beispielsweise bei laufendem Motor ein Betätigen des Halteantriebes nicht möglich ist.

Weitere Aktivierungsbedingungen können sein:
- Eine Zentralverriegelung des Kraftfahrzeuges signalisiert "Fahrzeugtüren entriegelt"
- Schlüssel ist aus dem Zündschloss des Kraftfahrzeuges entfernt
- Motor ist aus, beispielsweise Klemme 15 aus,
- Klemme 15 ein, Kraftfahrzeug ist betriebsbereit
- oder eine sonstige Stellung des Motorstartschalters.

Eine vorteilhafte Ausgestaltung der Erfindung sieht vor, dass die mindestens eine Aktivierungsbedingung ein von einem Freigabeschalter sendbares Freigabesignal ist oder umfasst. Der Freigabeschalter ist beispielsweise im Innenraum des Fahrzeugs, beispielsweise im Cockpit desselben, im Gepäckabteil, vorzugsweise geschützt durch einen Deckel, oder an anderer Stelle des Fahrzeuges angeordnet. Der Freigabeschalter kann aber auch einen an einem Fahrzeugschlüssel für das Fahrzeug oder an einem am Schlüsselanhängergehäuse angeordneten Sender umfassen und der Lastenträger einen zugeordneten Funkempfänger zum Empfang des Freigabesignals.

Somit kann beispielsweise durch Betätigung des Freigabeschalters im Schlüssel das Zeitintervall durch den Bediener des Fahrzeuges gegeben werden, worauf dann das Zeitintervall zur Betätigung des Antriebsschalters beginnt. Der Sender ist beispielsweise in einem Fahrzeugschlüsselgehäuse, insbesondere dessen Griff, angeordnet.

Die mindestens eine Aktivierungsbedingung kann auch eine Funktionsstellung eines Motorschalters zum Starten eines Fahrzeug-Motors des Fahrzeugs umfassen. Die Funktionsstellung ist beispielsweise eine Betriebsbereitschaft des Fahrzeuges, zum Beispiel ein Signal "Klemme 15 ein". Das Signal kann beispielsweise das geschaltete Plus am Zündstartschalter sein ("Klemme 15") oder auch die sogenannte Zündschloss-Radiostellung ("Klemme 15r").

Es ist aber auch der gerade umgekehrte Fall möglich, dass nämlich die mindestens eine Aktivierungsbedingung eine Funktionsstellung "Motor aus", zum Beispiel "Klemme 15", des Motorstartschalters umfasst. Somit ist also eine der Aktivierungsbedingungen jedenfalls so getroffen, dass zu der Aktivierung des Antriebsschalters und/oder zum Auslösen des Zeitintervalls der Motor ausgeschaltet wird oder ist. Die Aktivierungsbedingung kann beispielsweise auch ein Zustandswechsel "Motor ein - Motor aus" sein, so dass beispielsweise nach Abstellen des Fahrzeuges die Befestigungseinrichtung betätigbar ist, z.B. in die Freigabestellung verstellbar ist und/oder das Zeitintervall zum Betätigen Lösen der Befestigungseinrichtung beginnt und der Bediener Lastenträger beispielsweise nach Betätigen des Antriebsschalters und Entriegeln der Befestigungseinrichtung verstellen oder entfernen kann. Ein Zeitintervall, innerhalb dessen die Befestigungseinrichtung betätigbar ist, ist in dieser Situation vorzugsweise so bemessen, dass der Bediener zwar bequem zum Heck des Fahrzeuges gehen und dort den Lastenträger bedienen kann. Dann endet das Zeitintervall jedoch, so dass eine Fehlmanipulation des Lastenträgers verhindert wird.

Die mindestens eine Aktivierungsbedingung kann auch eine Bestromung einer Leuchte des Fahrzeugs, insbesondere einer am Heck des Fahrzeugs angeordneten Leuchte, und/oder eine am Lastenträger angeordnete Leuchte umfassen. Die Heckleuchte ist beispielsweise eine Nebelschlussleuchte, ein Rückfahrscheinwerfer, eine Blinkleuchte des Fahrzeugs oder des Lastenträgers oder dergleichen. Wenn die erfindungsgemäße Steuerung auf der Basis des Heckleuchtensignals arbeitet, sind nur kurze Kabelwege erforderlich, was z.B. kostengünstig ist.

Eine Variante der Erfindung kann vorsehen, dass die Leuchte eine Leuchte des Lastenträgers ist, deren Bestromung eine Aktivierungsbedingung für die erfindungsgemäße Steuerung bildet. So könnte die Steuerung beispielsweise mit einer Stromversorgungsleitung für mindestens eine dieser lastenträgerseitigen Leuchten verbunden sein, beispielsweise mit der zum Lastenträger führenden Versorgungsleitung. Diese Variante ist aufgrund einer kurzen Leitungsführung vorteilhaft.

Besonders bevorzugt ist jedoch, dass die Steuerung zur Ermittlung einer Bestromung der Leuchte mit einem Bordnetz des Fahrzeugs, zum Beispiel mit einer zur jeweiligen Leuchte führenden Stromversorgungsleitung, verbunden ist. Es ist aber auch möglich, dass die Steuerung mit einem Bus des Bordnetzes verbunden ist, über das die Leuchte aktiviert wird. Das Bordnetz des Fahrzeugs ist von außen nicht manipulierbar, was die Diebstahlsicherheit verbessert. Kontakte der Anhänger-Steckdose sind nämlich prinzipiell von außen her zugänglich und dementsprechend manipulierbar.

Die mindestens eine Aktivierungsbedingung bildet zweckmäßigerweise einen Bestandteil einer Aktivierungsbedingungsgruppe, die die Steuerung zur Aktivschaltung des Antriebsschalters für das Zeitintervall prüft, wobei die Aktivierungsbedingungsgruppe mindestens zwei Aktivierungsbedingungen aufweist, welche die Steuerung für eine Aktivierung des Antriebsschalters prüft. Somit ist eine Aktivierung des Antriebsschalters bei einem Einfachfehler, beispielsweise einem Kurzschluss, einer Störung an einem Schalter, durch eine Manipulation von außen oder dergleichen, unproblematisch, weil mindestens eine zweite Aktivierungsbedingung hinzutreten muss, bevor die Steuerung den Antriebsschalter aktiv schaltet beziehungsweise für ein Auslösen des Halteantriebs freigibt.

Die Aktivierungsbedingungsgruppe umfasst zweckmäßigerweise mindestens zwei der vorgenannten Aktivierungsbedingungen.

Besonders vorteilhafte Varianten von Aktivierungsbedingungsgruppen werden nachfolgend vorgestellt:

Eine besonders bevorzugte Aktivierungsbedingungsgruppe umfasst beispielsweise die beiden folgenden Aktivierungsbedingungen: Motorstartschalter zum Starten eines Fahrzeug-Motors des Fahrzeugs in Funktionsstellung "Motor aus" und/oder "Schlüssel aus einem Zündschloss des Fahrzeugs entfernt". An dieser Bedingung erkennt die Steuerung, dass das Fahrzeug außer Betrieb ist. Eine andere Bedingung wäre, dass der Motor des Fahrzeuges nicht läuft. Allerdings ist das Signal "Klemme 15" im Bereich des Fahrzeug-Hecks z.B. wegen einer Anhänger-Steckdose beziehungsweise einer Anhängekupplung häufig ohnehin vorhanden, so dass die Stellung des Motorstartschalters eine bevorzugte, einfach realisierbare Bedingung ist. Die weitere Bedingung der Aktivierungsbedingungsgruppe ist dann:
- mindestens eine, vorzugsweise mindestens zwei Blinkleuchten des Fahrzeugs eingeschaltet beziehungsweise mit wechselnder Bestromung.

Nach dem Abstellen des Fahrzeuges ist das Signal "Klemme 15" in der Regel "AUS" beziehungsweise wird der Zündschlüssel aus dem Zündschloss entfernt.

In einem nächsten Schritt wird das Fahrzeug verriegelt oder entriegelt, wobei bei aktuellen Fahrzeugen die Blinker des Fahrzeuges zumindest einmal aufleuchten. Die Bedienung erfolgt beispielsweise über die Funkfernbedienung, deren Sender zweckmäßigerweise in einem Gehäuse des Fahrzeugschlüssels angeordnet ist. Die Sicherheit bei diesem Konzept ist hoch, da zum einen die Startbedingung "Klemme 15 aus" und zum anderen mindestens ein Heckleuchtensignal, vorzugsweise zwei Heckleuchtensignale (der beiden heckseitigen Blinkleuchten), von der erfindungsgemäßen Steuerung ausgewertet werden. Die Signale der heckseitigen Blinkerleuchten sind im Heckbereich mit kurzen Leitungswegen für die erfindungsgemäße Steuerung verfügbar. Eine Auslösung während der Fahrt des Fahrzeuges ist nicht möglich. Eine Sabotage ist kaum möglich. Zudem sind die Kosten dieser Variante gering. Die Bedienung ist komfortabel.

Es versteht sich, dass das Sicherheitskonzept der Aktivierungsbedingungsgruppe auch mit anderen kombinierten Aktivierungsbedingungen realisierbar ist, beispielsweise:
- Nebenschlussleuchte und/oder Rückfahrscheinwerfer eingeschaltet und
- Motorschalter zum Starten eines Fahrzeug-Motors des Fahrzeugs in Betriebsbereitschaft, beispielsweise Signal "Klemme 15 ein", "Schlüssel ins Zündschloss gesteckt" oder dergleichen.

Es versteht sich, dass zu den beiden vorgenannten Aktivierungsbedingungsgruppen auch weitere Aktivierungsbedingungen hinzutreten können, was die Sicherheit des erfindungsgemäßen Konzeptes erhöht.

Nachfolgend werden weitere Aktivierungsbedingungen erörtert, die vorteilhaft sind.

Mindestens eine Aktivierungsbedingung kann beispielsweise auch umfassen, dass der Antriebsschalter vor Beginn der Aktivierung unbetätigt ist. Wenn also ein Bediener beispielsweise den Antriebsschalter bereits drückt, bevor das Zeitintervall an sich beginnen würde, aktiviert die Steuerung den Antriebsschalter nicht. Bei gedrücktem Antriebsschalter erfolgt also keine Aktivierung.

Eine weitere Sicherheitsmaßnahme ist es, wenn die Steuerung ein Starten des Halteantriebs nur dann zulässt, wenn der Antriebsschalter nach Beginn des Zeitintervalls von einer unbetätigten Stellung in eine Betätigungsstellung betätigt wird. Die Steuerung prüft also eine Signalflanke "Aus-Ein".

Es versteht sich, dass bei einer Ausgestaltung der Erfindung der Antriebsschalter nur einen Startimpuls für den Halteantrieb gibt und dieser dann so lange läuft, bis Freigabestellung oder die Haltestellung der Befestigungseinrichtung erreicht ist.

Ferner kann z.B. bei der Steuerung eine Begrenzungseinrichtung vorgesehen sein, die eine Aktivierung, z.B. Bestromung, des Halteantriebs zeitlich auf eine zum Erreichen der Haltestellung oder der Freigabestellung nötige Dauer begrenzt. Dadurch wird z.B. eine Überhitzung oder ein unnötiger Energieverbrauch vermieden.

Die Steuerung kann so ausgestaltet sein, dass sie das Zeitintervall während einer Bestromung des Halteantriebs und/oder während einer Betätigung des Antriebsschalters verlängert. Somit wird verhindert, dass der Halteantrieb abschaltet, bevor die Haltestellung oder die Freigabestellung erreicht ist. Andererseits braucht das Zeitintervall nicht unnötig lange zu sein, da lediglich der Start des Halteantriebs innerhalb des Zeitintervalls erfolgen muss.

Die Steuerung umfasst zweckmäßigerweise mindestens einen Signalausgang zur Ansteuerung einer optischen und/oder akustischen Funktionsanzeigeeinrichtung des Fahrzeugs oder des Lastenträgers. Die Funktionsanzeigeeinrichtung kann aber auch ein integraler Bestandteil der Steuerung sein, beispielsweise auf einer Steuerungsplatine oder im Gehäuse der Steuerung angeordnet sein. Die Funktionsanzeigeeinrichtung ist zweckmäßigerweise im Bereich des Lastenträgers angeordnet, das heißt im Bedienbereich zum Verstellen oder Ergreifen des Lastenträgers. Ferner kann die Funktionsanzeigeeinrichtung auch in einem Display des Fahrzeugs vorgesehen sein, beispielsweise im Cockpit desselben.

Die Steuerung signalisiert beispielsweise eine Aktivierung des Antriebsschalters über die mindestens eine Funktionsanzeigeeinrichtung. Ferner kann die Steuerung beispielsweise auch eine Störung der Befestigungseinrichtung oder eine Fehlbedienung mittels der Funktionsanzeigeeinrichtung anzeigen, beispielsweise wenn der Antriebsschalter bereits vor Beginn des Zeitintervalls gedrückt war.

Ein weiteres Sicherheitsmerkmal kann ein Doppel-Betätigungskonzept sein: Der Antriebsschalter kann nur dann wirksam betätigt werden, wenn ein zusätzlicher Freigabeschalter oder Sicherheitsschalter gleichzeitig oder in kurzer Zeit vorher bedient worden ist. Nur wenn also beide Schalter (Antriebsschalter und Sicherheitsschalter) gleichzeitig oder fast gleichzeitig betätigt werden, ist ein Verfahren des Halteantriebs von der Haltein die Freigabestellung oder umgekehrt möglich.

Nachfolgend werden Ausführungsbeispiele der Erfindung anhand der Zeichnung dargestellt. Es zeigen:
- Figur 1: einen Lastenträger, der an einer Anhängekupplung eines Kraftfahrzeugs befestigbar ist, in einer Perspektive schräg von hinten,
- Figur 2: eine Befestigungseinrichtung des Lastenträgers gemäß Figur 1,
- Figur 3: ein zweites Ausführungsbeispiel eines erfindungsgemäßen Lastenträgers mit einer alternativen Befestigungseinrichtung,
- Figur 4: eine Schnittdarstellung der Befestigungseinrichtung des Lastenträgers gemäß Figur 3,
- Figur 5: eine Befestigungseinrichtung mit mehreren Klemmund/oder Widerlagerkörpern, und
- Figur 6: einen an einer Steckaufnahme eines Fahrzeugs befestigbaren Lastenträger.

Bei den nachfolgend im Detail erläuterten Lastenträgern 10a-10c sind gleiche oder gleichartige Komponenten mit denselben Bezugszeichen versehen, wobei teilweise die Kleinbuchstaben a, b, c zur Unterscheidung der Ausführungsbeispiele bzw. Lastenträger 10a, 10b, 10c hinzugefügt sind.

Die Lastenträger 10a, 10b, 10c sind von einem Fahrzeug 80 lösbare Lastenträger.

Die Lastenträger 10a, 10b, 10c haben jeweils eine Tragbasis 11, die als Tragegestell ausgestaltet ist. Die jeweilige Tragbasis 11 umfasst einen Grundschenkel 12, von dem Seitenschenkel 13 abstehen. Der Grundschenkel 12 und die Seitenschenkel 13 bilden eine U-förmige Konfiguration. Die Tragbasis 11 ist sozusagen das Grundgestell bzw. der Grundträger des Lastenträgers 10a, 10b, 10c.

Die Tragbasis 11 ist zur lösbaren Befestigung am Fahrzeug 80 vorgesehen. Dazu ist eine Befestigungseinrichtung 16a, 16b, 16c vorhanden, mit der eine lösbare Verbindung zwischen dem Lastenträger 10a, 10b, 10b und dem Fahrzeug 80 herstellbar ist.

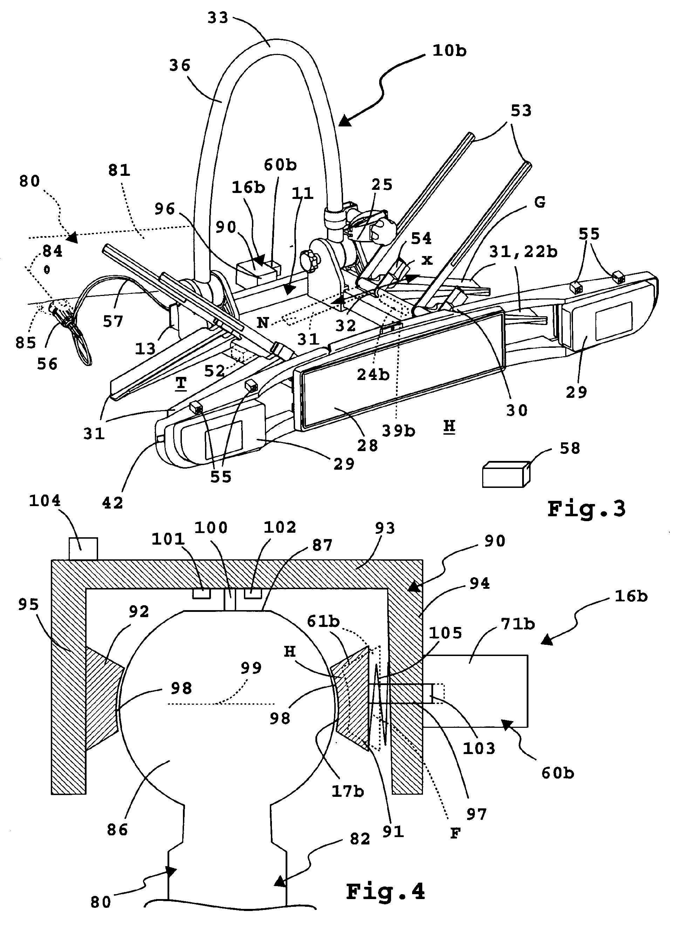

Die Befestigungseinrichtung 16a, 16b ist beispielsweise zur Befestigung an einer Anhängekupplung 82 (angedeutet in Figur 3) des Fahrzeugs 80 vorgesehen.

Die Befestigungseinrichtung 16c kann an einer insbesondere spezifisch für Lastenträger vorgesehene fahrzeugseitige Halterung 120 befestigt werden.

Jedenfalls ist bei den Lastenträgern 10a, 10b, 10c vorgesehen, dass sie beim Fahrbetrieb des Fahrzeugs 80, dann wenn sie benötigt werden und eine Last auf sie aufgelegt werden soll, eine Gebrauchsstellung einnehmen und dabei vor das Heck 81 des Fahrzeugs 80 vorstehen.

Beispielsweise umfassen die Befestigungseinrichtungen 16a, 16b eine Klemmkammer oder Klemmaufnahme 17a, 17b, mit der die Befestigungseinrichtung 16a, 16b an einem Kugelkopf 86 der Anhängekupplung 82 oder einem sonstigen Formstück oder Kuppelkörper derselben verklemmt werden kann.

Die Lastenträger 10a, 10b, 10c haben zum Tragen einer Last jeweils Tragegestelle 25, die bezüglich der Tragbasis 11 feststehend oder beweglich, z.B. schwenkbar und/oder verschieblich, gelagert sind. Die jeweils Tragegestelle 25 umfassen jeweils Tragschenkel 26, die über einen Verbindungsschenkel 27 miteinander verbunden sind. Der Verbindungsschenkel 27 ist beispielsweise als ein Kennzeichenträger ausgestaltet oder hält einen Kennzeichenträger 28. Der Verbindungsschenkel 27 und die Tragschenkel 26 bilden eine U-förmige Anordnung. Beim Fahrbetrieb des Fahrzeugs 80 stützen die Grundschenkel 12 der Tragbasis 11 die Tragschenkel 26 ab. Der Verbindungsschenkel 27 und der Grundschenkel 12 liegen einander gegenüber. Selbstverständlich können auch andere Gestellbauweisen gewählt sein. Weiterhin ist es denkbar, dass beispielsweise anstatt eines Tragegestells 25 eine Tragplattform, mithin also eine plattenartige Anordnung, vorgesehen ist.

Am Kennzeichenträger 28 können beispielsweise Leuchten 29 angeordnet sein. Die Leuchten 29 sind mittels Schwenklagern 30 schwenkbeweglich am Verbindungsschenkel 27 gelagert, so dass sie zwischen der in der Zeichnung dargestellten Fahrposition, bei der sie im Wesentlichen mit dem Kennzeichenträger 28 fluchten oder parallel dazu sind, und einer Nichtgebrauchsposition verstellbar, so dass sie nahe bei den Tragschenkeln 26 angeordnet sind. Mithin sind also die Leuchten 29 am Tragegestell 25 angeordnet und nicht an der Tragbasis 11, wobei dies selbstverständlich denkbar ist.

Das Tragegestell 25 lagert schwenkbar und/oder linear und/oder gekrümmt verschieblich Stützrinnen 31, die zum Abstellen von beispielsweise Fahrrädern oder anderen Zweirädern gedacht sind. Die Stützrinnen 31 sind mittels Schwenklagern 32 schwenkbar an den Tragschenkeln 26 gelagert, so dass sie zwischen der in der Zeichnung dargestellten Gebrauchsposition G und einer in einen Innenraum zwischen den Tragschenkeln 26 vorgesehenen Nichtgebrauchsstellung N oder Staustellung, verstellbar sind. Eine auf den Stützrinnen 31 befindliche Last kann nebenbei bemerkt mittels Riemen 53 gesichert werden, die in Halter 54 eingesteckt und dort vorzugsweise in der Art einer Ratsche verrastet werden.

Auch eine Stütze 33 zum Abstützen der nicht dargestellten Last, kann zu den Verbindungsschenkeln 27 hin und von diesen weg in eine im Wesentlichen aufrechte Position oder winkelige Position gestellt werden, in der ein Lastenträger an ihnen befestigbar ist. Hierzu sind Schwenklager 34 vorgesehen. Mittels einer Klemmschraube 35 kann ein jeweiliges Schwenklager 34 fixiert werden, so dass die jeweilige Position der Stütze 33 fixiert ist.

Die Stütze 33 ist beispielsweise in der Gestalt eines U-Bügels oder eines V-Bügels ausgestaltet, d.h. sie bildet einen Haltebügel 36. An dem Haltebügel 36 sind beispielsweise Haltearme 37 zum Halten und Stützen der Last vorhanden. Die Haltearme 37 haben beispielsweise Klemmen, mit denen ein Rahmen eines Fahrrades geklemmt werden kann.

Bei den Lastenträgern 10a, 10b, 10c sind mehrere Motoren vorgesehen, das heißt Antriebe elektrischer und/oder fluidischer Art, die deren jeweilige Handhabung deutlich erleichtern. Die Lastenträger 10a, 10b, 10c haben z.B. Halteantriebe 60a, 60b, 60c an ihren Befestigungseinrichtungen 16a, 16b, 16c. Diese funktionieren vorliegend elektrisch, wobei selbstverständlich auch andere Energieträger möglich sind, beispielsweise Druckluft, Öl oder dergleichen (pneumatische Antriebe, hydraulische Antriebe).

Die Befestigungseinrichtung 16a ist wahlweise manuell oder motorisch betätigbar, wobei nachfolgend das motorische Konzept vorgestellt werden wird. Beispielsweise ist an einem Klemmgehäuse 19, was die Klemmaufnahme 17a bereitstellt, ein Halteglied 61a beweglich gelagert. Das Halteglied 61a umfasst einen Klemmkörper 62, der an einem Schwenklager 63 schwenkbar gelagert ist. Der Klemmkörper 62 hat zwei Zug- und Lager-Arme 64, die vom Klemmkörper 62 winkelig abstehen, beispielsweise eine U-förmige Gestalt bilden. Am Klemmkörper 62 ist eine Ausnehmung 65 vorhanden, vorliegend eine kreisrunde Ausnehmung, die zur Aufnahme des Kugelkopfes 86 ausgestaltet ist. Die Arme 64 sind an einer Lagerachse 66 schwenkbar gelagert und sind an einem Widerlagerkörper 67 vorbeigeführt. Derart, dass sich der Widerlagerkörper 67 und der Klemmkörper 62 gegenüberliegend befinden und die Klemmaufnahme 17a begrenzen. Beispielsweise sind die Arme 64 durch Öffnungen 68 am Widerlagerkörper 67 hindurchgeführt.

Der Klemmkörper 62 kann eine Schwenk- und/oder Schiebebewegung relativ zum Widerlagerkörper 67 durchlaufen, beispielsweise eine axiale Verschiebung angedeutet durch einen Pfeil 69 und/oder eine Schwenkbewegung angedeutet durch einen Pfeil 70. Somit kann also der Widerlagerkörper 67 um die Lagerachse 66 schwenken und somit die Klemmaufnahme 17a öffnen, so dass der Kugelkopf 86 in diese hinein bewegt werden kann, oder die Klemmaufnahme 17a schließen, wobei der Klemmkörper 62 zum Widerlagerkörper 67 hin bewegt wird im Sinne eines Klemmens des Kugelkopfes 86. Dies ist dann eine Haltestellung H.

Die Klemmaufnahme 17a der Befestigungseinrichtung 16a ist mittels eines Hebels 18 öffenbar und schließbar.

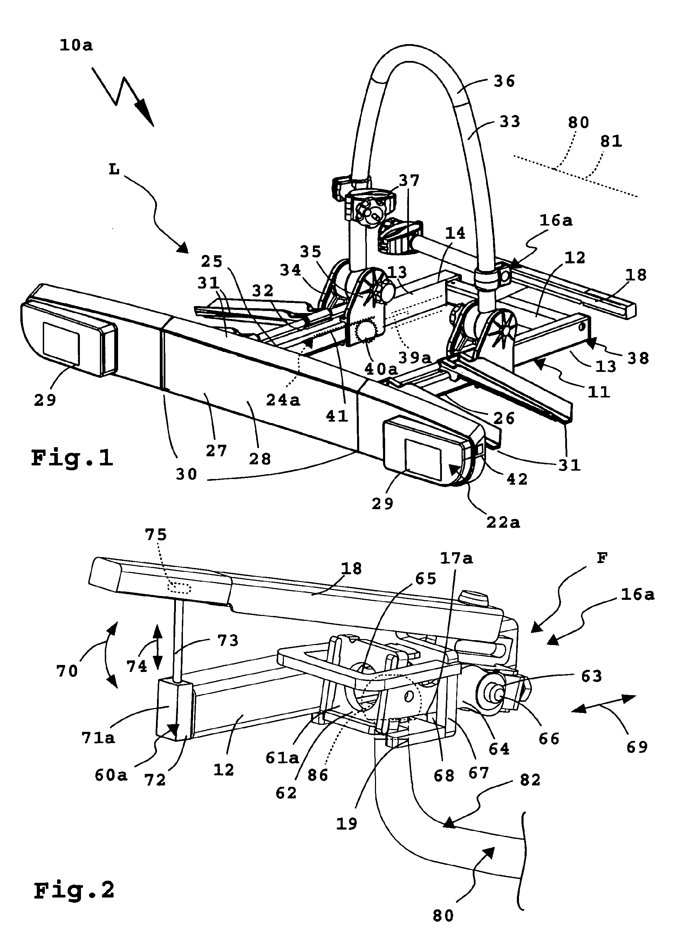

Der Klemmkörper 62 kann mit dem Hebel 18 betätigt werden, das heißt zwischen seiner Freigabestellung F, die in Figur 2 dargestellt ist, und der den Kugelkopf 86 klemmenden Haltestellung H.

Nun ist es prinzipiell möglich, dass ein Bediener den Hebel 18 ergreift und diesen betätigt. Vorliegend ist jedoch zusätzlich noch ein motorisches, erfindungsgemäßes Bedienkonzept realisiert. Der Halteantrieb 60a umfasst beispielsweise einen Linearantrieb mit einem Motor 71a, der in einem Gehäuse 72 angeordnet ist. Der Motor 71a betätigt oder hat eine Stange 73, beispielsweise eine Spindel oder auch eine Schubstange, an, so dass diese eine Auf- und Abbewegung 74 durchläuft.

Der Halteantrieb 60a ist beispielsweise einerseits am Grundschenkel 12, also der Tragbasis 11, andererseits am Hebel 18 befestigt. An beiden Stellen kann eine Lagerung, insbesondere eine Drehlagerung und/oder Schiebelagerung vorhanden sein. Vorliegend ist die hebelseitige Lagerung mittels eines Schwenkschiebelagers 75 realisiert, so dass der Hebel 18 zwar schub- und zugfest mit der Stange 73 verbunden ist, jedoch relativ zur Stange 73 schwenken kann. Das Schwenkschiebelager 75 kann lösbar sein, so dass der Hebel 18 auch manuell betätigbar ist.

Beispielsweise wirkt der Motor 71a auf die Stange 73 mittels eines Ritzels, das mit einem Zahnstangenabschnitt an der Stange 73 im Bereich des Gehäuses 72 kämmt. Weiterhin ist auch ein Spindeltrieb möglich, das heißt dass beispielsweise der Motor 71a eine Spindelmutter antreibt, die mit einem Spindelgewinde an der Stange 73 kämmt.

Bevorzugt ist es in beiden Fällen, dass eine Selbsthemmung vorhanden ist, beispielsweise eine selbsthemmende Steigung des Gewindes an der Stange 73, so dass die Stange 73, somit also auch der Hebel 18, auch ohne Bestromung oder Betätigung des Motors 71a ihre bzw. seine jeweilige Position einhält. Eine zusätzliche Verriegelung ist nicht notwendig, jedoch möglich.

Bei den Lastenträgern 10a, 10b können auch zum Tragen von Lasten, z.B. Fahrrädern, vorgesehene Lastentragteile 22a, 22b motorisch verstellt werden.

Ein Lastentragteil-Antrieb 24a umfasst z.B. einen Motor 39a, der beispielsweise an der Tragbasis 11 befestigt ist. Z.B. befindet sich der Motor 39a in einem Innenraum des Seitenschenkels 13. Der Motor 39a ist mit einem Antriebs-Ritzel 40a versehen, um ein vom Tragegestell 25 gebildetes Lastentragteil 22a anzutreiben. Das Ritzel 40a kämmt beispielsweise mit einer Zahnschiene 41 am Lastentragteil 22a. Beispielsweise ist die Zahnschiene 41 an der dem Seitenschenkel 13 zugewandten Innenseite des Tragschenkels 26 angeordnet, derart, dass sie mit dem Ritzel 40a kämmen kann. Wenn also der Motor 39a läuft, bewegt er die Zahnschiene 41 linear hin und her, so dass dadurch auch der Schlitten bzw. das Lastentragteil 22a linear einer näher am Heck 81 befindlichen Fahrstellung F und einer davon entfernteren Ladestellung L verfahrbar ist.

Beim Lastenträger 10b treibt ein Lastentragteil-Antrieb 24b die Stützrinnen 31 an. Aus Gründen der Vereinfachung ist nur ein Lastentragteil-Antrieb 24b dargestellt, der die in der Zeichnung rechten Stützrinnen 31 betätigt, wobei selbstverständlich auch für die beiden linken Stützrinnen 31 ein solcher Antrieb vorgesehen sein kann. Bei dem Lastentragteil-Antrieb 24b handelt es sich um einen Motor, nämlich einen Direktantrieb, der über eine nicht dargestellte Antriebswelle, die an seinen Stirnseiten vor sein Gehäuse vorsteht, mit den Stützrinnen 31 drehfest verbunden ist, um diese zwischen der in der Zeichnung dargestellten Nutzstellung und einer zwischen die Tragschenkel 26 hinein verstellten Nichtgebrauchsstellung zu verstellen.

Bei der Befestigungseinrichtung 16b ist ein elektrisches oder fluidisches Antriebskonzept im Vordergrund, die manuelle Bedienung nachrangig: In einem Gehäuse 90 der Befestigungseinrichtung 16b, das prinzipiell die Klemmaufnahme 17b umschließt, sind ein als Halteglied 61b dienender Klemmkörper 91 und ein diesem gegenüberliegender Widerlagerkörper 92 angeordnet. Der Widerlagerkörper 92 ist beispielsweise ortsfest.

Beispielsweise ist das Gehäuse 90 in der Art eines Deckels ausgestaltet. Das Gehäuse 90 hat an seiner Unterseite jedenfalls eine Einführöffnung für die Anhängekupplung 82. Das Gehäuse 90 hat beispielsweise eine Oberwand 93, von der sich Seitenwände 94, 95 und 96 weg erstrecken. Die Seitenwände 94, 95 sind einander gegenüberliegend. Die Seitenwände 96 (es sind zwei vorhanden) liegen sich ebenfalls gegenüber. Beispielsweise hat das Gehäuse eine kubische Gestalt, wobei selbstverständlich auch andere Geometrien möglich sind.

Der Widerlagerkörper 92 ist an der Seitenwand 95 feststehend angeordnet, der Klemmkörper 91 an einem Schiebelager 97 beweglich gelagert. Der Klemmkörper 91 kann relativ zum Widerlagerkörper 92 verstellt werden, das heißt zu diesem hin, bis er den Kugelkopf 86 klemmende Haltestellung H einnimmt, oder vom Widerlagerkörper 92 weg (gestrichelt dargestellt), bis er schließlich eine Freigabestellung F einnimmt, in der der Kugelkopf 86 oder ein sonstiger zu klemmender Kuppelkörper einer Anhängekupplung oder ein Kuppelstück des Fahrzeuges 80 zwischen den Klemmkörper 91 und dem Widerlagerkörper 92 hineingebracht werden kann oder aus dem Zwischenraum zwischen diesen beiden Komponenten heraus bewegt werden kann.

In der Freigabestellung F kann die Befestigungseinrichtung 16d von der Anhängekupplung 82 entfernt werden. In der Haltestellung H hingegen ist ein fester Halt, zudem auch eine Klemmung möglich.

Vorzugsweise ist das Halteglied 61b durch eine Feder 105 in die Haltestellung H belastet. Die Feder 105 stützt sich am Halteglied 61b und dem Gehäuse 90 ab. Der Halteantrieb 60b wirkt in diesem Fall als Löseantrieb, d.h. nur unidirektional, in die Freigabestellung F. Beispielsweise kann der Halteantrieb 60b auch durch einen Druckluft-Antrieb oder Elektromagnetantrieb gebildet sein, der nur in einer Richtung wirkt.

Die beiden klemmenden Komponenten, nämlich der Klemmkörper 91 und der Widerlagerkörper 92 haben einander zugewandte Formschlusskonturen 98. Die Formschlusskonturen 98 sind also an den vorderen, dem Kugelkopf 86 zugewandten Stirnseiten des Klemmkörpers 91 und des Widerlagerkörpers 92 angeordnet. Beispielsweise haben die Formschlusskonturen 98 eine innenkugelige oder kalottenartige Gestalt, so dass sie zur formschlüssigen Anlage an dem Kuppelkörper, vorliegend dem Kugelkopf 86 ausgestaltet sind. Wenn ein sonstiger Kuppelkörper, beispielsweise ein quaderförmiger Körper, ein polygonaler Körper oder dergleichen geklemmt oder gehalten werden soll, haben erfindungsgemäß zusammenwirkende Klemm- und Widerlagerkörper selbstverständlich dazu angepasste Formschlusskonturen, z.B. Planflächen, inneneckige Konturen oder dergleichen. Jedenfalls ist es zweckmäßig, wenn ein formschlüssiger Halt des Kugelkopfes 86 am Klemmkörper 91 und Widerlagerkörper 92 möglich ist.

Zudem wirken der Klemmkörper 91 und der Widerlagerkörper 92 etwa im Bereich eines Äquatorialumfangs 99 auf den Kugelkopf 86, so dass ein optimales Zentrieren und zudem ein guter Halt möglich ist.

Weiterhin ist es möglich, dass Stützflächen im Bereich der Klemmaufnahme 17b vorhanden sind, beispielsweise eine Stütze 100 an der Oberwand 93 die zum Abstützen an einer oberen Abflachung 87 des Kugelkopfes 86 vorgesehen ist. Vorliegend ist die Stütze 100 stirnseitig, das heißt an ihrer der Abflachung 87 zugewandten Stirnfläche, relativ schmal oder mit einer Flächenausdehnung versehen, so dass das Gehäuse 90 relativ zum Kugelkopf 86 schwenkbar ist und die beiden klemmenden Komponenten (Klemmkörper 91 und der Widerlagerkörper 92) bezüglich des Äquatorialsumfangs 99 ausgerichtet werden können.

Dieses Ausrichten wird auch durch Sensoren 101 und 102 unterstützt, die zu einer Abstandsmessung ausgestaltet sind. Beim Ausführungsbespiel sind die Sensoren 101, 102 an der Oberwand 93 angeordnet und messen einen Abstand zur Abflachung 87. Es versteht sich, dass auch an anderer Stelle Abstandssensoren oder sonstige Sensoren vorgesehen sein können, beispielsweise auch dazu, dass Vorhandensein des Kugelkopfes 86 (bei anderen Ausführungsformen selbstverständlich eines anderen Kuppelkörpers) innerhalb der Klemmaufnahme zu ermitteln, was als eine Schaltbedingung für den Halteantrieb 60a, 60b dienen kann. An dieser Stelle ist noch nachzutragen, dass selbstverständlich auch bei der Befestigungseinrichtung 16a Sensoren vorhanden sein können oder auch die später noch im Detail erläuterte Steuerung 52, die sowohl Sicherheitsfunktionen haben kann, als auch den Komfort erhöhen kann.

Das Aufsetzen der Befestigungseinrichtung 16b auf die Anhängekupplung 82, insbesondere die Zentrierung, verläuft nun sehr komfortabel: Wenn die beiden Sensoren 101, 102 denselben Abstand zum zu kuppelnden Körper, vorliegend dem Kugelkopf 86, ermitteln, schalten sie einen Halteantrieb 60b ein.

Der Halteantrieb 60b umfasst beispielsweise einen Elektromotor 71b, dessen Abtriebswelle 103 zum Vor- und Zurückspindeln des Klemmkörpers 91 ausgestaltet ist. Wenn also der Halteantrieb 60b in Gang gesetzt wird, fährt er den Klemmkörper 91 zum Widerlagerkörper 92 hin (in Richtung der Haltestellung H) oder von diesem Weg in Richtung der Freigabestellung F. Die Welle 103 durchsetzt beispielsweise das Schiebelager 97.

Es ist beispielsweise denkbar, dass der Klemmkörper 91 linear geführt ist, so dass die Abtriebswelle 103 in den Klemmkörper 91 einschraubbar oder aus diesem herausschraubbar ist, um dessen Längsverstellung zu bewirken.

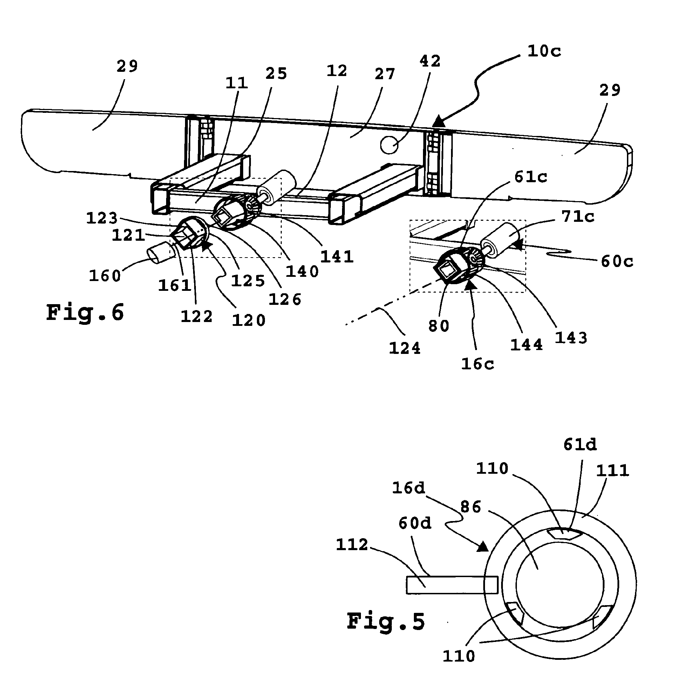

Es versteht sich, dass die Klemmbacken oder Klemmkörperanordnung enthaltend den Klemmkörper 91 und den Widerlagerkörper 92 auch weitere Klemm- und Widerlagerelemente oder -körper umfassen kann. Bevorzugt ist es, dass beispielsweise wie in Figur 5 dargestellt im Bereich eines Dreieckes (in Draufsicht) jeweils ein Klemmkörper 110 oder ein Widerlagerkörper angeordnet ist. Denkbar ist z.B., das zwei Widerlagerkörper ortsfest sind, ein Klemmkörper 110 dazu relativ verstellbar. Durch die 3-seitige Verspannung, die optimal aufgrund des motorischen Antriebskonzeptes bedienbar ist, ist eine statische Überbestimmung nicht zu befürchten, gleichzeitig ein optimaler Halt gewährleistet.

Selbstverständlich können auch drei bewegliche Klemmkörper und kein Widerlagerkörper, zwei bewegliche Klemmkörper und ein ortsfester Widerlagerkörper vorgesehen sein. Des Weiteren ist es selbstverständlich nicht notwendig, dass wie beim Ausführungsbeispiel gemäß Figur 4 einer der klemmenden Körper, nämlich der Widerlagerkörper 92 ortsfest ist. Es ist auch möglich, dass beispielsweise zwei Klemmkörper vorhanden sind, die relativ zueinander jeweils angetrieben und verstellbar sind, wobei es zweckmäßig ist, dass der Halteantrieb über ein Getriebe auf beide Klemmkörper wirkt, so dass nur ein Motor notwendig ist. Selbstverständlich ist es auch zweckmäßig, wenn bei mehreren, das heißt mehr als zwei beweglichen Klemmkörpern, das Übertragungsoder Übersetzungsgetriebe auf alle diese Körper wirkt.

Möglich ist es z.B., wie bei einer Befestigungseinrichtung 16d in Figur 5 dargestellt, dass mehrere Klemmkörper 110, also Halteglieder 60d, in der Art einer Klemmspange angeordnet sind und mittels eines drehbaren Ringes 111 zur Kupplungskugel hin geschraubt oder von dieser weggeschraubt werden. Zweckmäßigerweise ist dazu ein Motor 112 vorgesehen, der beispielsweise in der Art des Motors 71c den Ring 112 antreibt.

Die Sensoren 101, 102 können also, wie erläutert, den Halteantrieb 60b ein- und ausschalten, wenn die passende Positionierung von Klemm- und Widerlagerkörpern erreicht ist. Es ist aber auch möglich, dass beispielsweise Anzeigemittel, z.B. eine Anzeige 104, vorhanden ist, die bei geeigneter Ausrichtung der Sensoren 101, 102 relativ zum zu kuppelnden Element, dem Kugelkopf 86, leuchtet. Der Bediener hat somit einen Anhaltspunkt, ob die Winkellage der Befestigungseinrichtung 16b relativ zur Anhängekupplung 82 stimmt.

Die vorliegend elektrischen Lastentragteil-Antriebe 24a, 24b sowie die Halteantriebe 60a, 60b werden vorzugsweise von einem Bordnetz 84 des Fahrzeugs 80 mit Energie, d.h. mit Strom, versorgt. Selbstverständlich wären auch fluidische, beispielsweise pneumatische Lastentragteil-Antriebe möglich, was jedoch bei den Ausführungsbeispielen nicht realisiert ist.

Nachfolgend werden am Beispiel des Lastenträgers 10b eine Steuerung und ein Anschlusskonzept erläutert, die auch bei den Befestigungseinrichtungen 16a, 16c möglich sind.

Beispielsweise ist ein Steckverbinder 56 des Lastenträgers 10b, in eine Anhängersteckdose 85 des Fahrzeugs 80 eingesteckt, um von dort mit Strom und zweckmäßigerweise auch mit Steuersignalen versorgt zu werden. Somit ist also eine Verbindung zum Bordnetz 84 des Fahrzeugs 80 hergestellt. Der Steckverbinder 56 ist über ein Kabel 57 mit der Steuerung 52 und diese wiederum in nicht dargestellter Weise elektrisch mit dem Halteantrieb 60b verbunden.

Bei dem Steuersignal, das die Steuerung 52 vom Bordnetz 84 empfängt, kann es sich beispielsweise um ein Bus-Signal bzw. eine Bus-Information von einem fahrzeugseitigen Bus, z.B. einen CAN-Bus, handeln. Wenn also beispielsweise signalisiert ist, dass die Türen des Fahrzeugs 80 geöffnet sind (Zentralverriegelung auf) heißt das, dass das Fahrzeug 80 steht, zumindest bei einer entsprechenden Programmierung des Fahrzeugs 80. Dann kann ein Bediener beispielsweise durch eine Druckbetätigung eines Schalters 42 die Steuerung 52 zum Ansteuerung des Halteantriebs 60b und/oder des Lastentragteil-Antriebs 24b betätigen.

Ein innovatives Bedienkonzept kann vorsehen, dass beispielsweise durch eine vorbestimmte Betätigung der Abstandssensoren 55 die Steuerung 52 einen Bedienbefehl erhält, um den Halteantrieb 60b zu betätigen bzw. mit Strom zu versorgen. Wenn also beispielsweise die Abstandssensoren 55 mit einer vorbestimmten Bediensequenz angesteuert werden, z.B. durch ein Schwenken einer Hand vor einem oder mehreren der Abstandssensoren 55, steuert die Steuerung 52 den Halteantrieb 60b zum Verstellen der Befestigungseinrichtung 16b an. Selbstverständlich kann dies auch in Abhängigkeit von einem Abstand des ansteuernden Körpers relativ zu einem oder mehreren der Abstandssensoren 55 abhängen.

Weiterhin ist ein drahtloses Bedienkonzept möglich, bei dem beispielsweise ein Sender 58 einen in der Zeichnung nicht sichtbaren Empfänger der Steuerung 52 per Funk, Ultraschall, Infrarot oder in anderer Weise drahtlos ansteuert, um den Halteantrieb 60b zu schalten. Hier ist es besonders zweckmäßig, wenn das nur in einem relativ kurzen Nahbereich möglich ist, so dass der Bediener den Lastenträger 10a-10c nach Lösen der Befestigungseinrichtung 16a-16d halten kann.

Es versteht sich, dass über die in der Zeichnung beispielhaft dargestellten Abstandssensoren 55 hinaus auch weitere Sensoren, insbesondere auch optische oder Ultraschallsensoren, vorgesehen sein können.

Ein Steckvorsprung 140 der Befestigungseinrichtung 16c und eine Steckaufnahme 121 der Halterung 120 haben zweckmäßigerweise rechteckige oder quadratische Außen- und Innenkonturen, wobei andere, auch runde Geometrien, möglich sind. Beispielsweise ist die Steckaufnahme 121 an einem hülsenartig ausgestalteten Aufnahmeteil 122 vorgesehen. An dem Aufnahmeteil 122 ist ein außermittiger Längsanschlag 123 vorgesehen. Der Längsanschlag 123 und ein Widerlagerbereich bzw. Spannbereich des Aufnahmeteils 122 sind bezüglich einer Steckachse 124 mit einem Längsabstand zueinander versehen, was ein gewisses Verkippen oder Verkanten im Sinne eines optimierten Verspannens vorteilhaft bewirken kann. Ein Widerlagerbereich 125, also ein Widerhalt, ist beispielsweise an einer Stützhülse 126 angeordnet oder vorgesehen, die ihrerseits wiederum am freien Ende des Aufnahmeteils 122 verdrehsicher angeordnet ist, beispielsweise angeschweißt oder angeklebt oder angeschraubt. Auf die Stützhülse 126, die ein Gewinde aufweist, ist eine drehbar an einem Befestigungsarm 141 des Lastenträgers 10c gelagerte, ein Halteglied 61c bildende Überwurfhülse 142 aufschraubbar, die auf das Gewinde an der Stützhülse 126 aufschraubbar ist. Die beiden Gewinde bilden Formschlusskonturen und Gegen-Formschlusskonturen.

Die Überwurfhülse 142 ist zwar drehbar und in einem gewissen Maß bezüglich der Steckachse 124, die insoweit auch eine Spannachse darstellt, verschieblich, jedoch nur bis zu einem nicht dargestellten Endanschlag. Dadurch ist es möglich, dass durch Aufschrauben der Überwurfhülse 142 auf die Stützhülse 126 der Befestigungsarm 141 an der Fahrzeug-Halterung 13c verspannt ist.

Das Halteglied 61c, d.h. die Überwurfhülse 142, ist durch einen Halteantrieb 60c antreibbar. Beispiel kämmt ein Abtriebsritzel 143 eines Motors 71c des Halteantrieb 60c mit einer Zahnung 144 am Halteglied 61c (der Überwurfhülse 142), so dass dieses zwischen einer auf die Stützhülse 126 aufgeschraubten Haltestellung und einer Freigabestellung motorisch verstellbar ist.

Die Befestigungseinrichtung 16c kann über einen Antriebsschalter 42 ein- und ausgeschaltet werden. Die Befestigungseinrichtung 16c kann über eine nicht dargestellte elektrische Verbindung mit einem Bordnetz des Fahrzeugs 80 verbunden werden, z.B. zu ihrer Steuerung und/oder elektrischen Energieversorgung. Vorteilhaft sind elektrische Kontakte im Innenraum der Steckaufnahme 121 und am Steckvorsprung 140 vorhanden, die beim Aneinanderstecken der beiden Teile in Kontakt gelangen.

Es versteht sich, dass die beim Lastenträger 10c angeordnete Befestigungseinrichtung 16c genauso am Fahrzeug 80 vorgesehen sein könnte und das "passive" Bauteil, d.h. z.B. die Halterung 120, am Lastenträger 10c. Dann könnte beispielsweise ein Stützbereich ähnlich der Stützhülse 126 am Steckvorsprung 140 vorgesehen sein, während das bewegliche Halteglied, entsprechend der Überwurfhülse, im Bereich der. Steckaufnahme 121 angeordnet ist, wobei dort, am Fahrzeug, dann auch zweckmäßigerweise der Halteantrieb vorgesehen ist.

Möglich ist z.B. ein am Fahrzeug 80 angeordneter Halteantrieb 160, der einen Zuganker 161 in Richtung der Steckachse 124 hin und her bewegen und/oder quer dazu verschwenken kann, wobei der Zuganker 161 ein Halteglied bildet und in eine am Steckvorsprung 140 vorgesehene, d.h. am lastenträgerseitigen Bauteil der Lastenträger-Kupplung vorgesehene Aufnahme, also einen Widerhalt, eingreift und so die beiden Kupplungsteile (Steckaufnahme 121 und Steckvorsprung 140) gegeneinander verspannen kann.

## Patentansprüche

1. Lastenträger für ein Fahrzeug (80), insbesondere einen Personenkraftwagen, mit einer Tragbasis zum Tragen einer Last, und mit einer Befestigungseinrichtung (16a-16d) zum lösbaren Befestigen an einem Widerhalt, insbesondere einer Anhängekupplung, des Kraftfahrzeugs (80), wobei die Befestigungseinrichtung (16a-16d) mindestens ein Halteglied (61a-61d) aufweist, das zwischen einer zum Halten an dem Widerhalt vorgesehenen Haltestellung, und einer zum Entfernen der Befestigungseinrichtung (16a-16d) von dem Widerhalt vorgesehenen Freigabestellung verstellbar ist, **dadurch gekennzeichnet, dass** die Befestigungseinrichtung (16a-16d) mindestens einen mit einem Antriebsschalter (42) schaltbaren elektrischen und/oder fluidischen Halteantrieb (60a-60d) zum Antreiben des mindestens einen Halteglieds (61a-61d) aufweist.

2. Lastenträger nach Anspruch 1, **dadurch gekennzeichnet, dass** das mindestens eine Halteglied (61a-61d) einen relativ zu einem Widerlagerkörper (67) der Befestigungseinrichtung (16a-16d) verstellbaren Klemmkörper (91; 110) umfasst, wobei der Widerhalt, insbesondere ein Kuppelkörper oder eine Kupplungskugel (86) einer Anhängekupplung des Fahrzeugs (80), zwischen den Klemmkörper (91; 110) und den Widerlagerkörper (67) klemmbar ist.

3. Lastenträger nach Anspruch 1 oder 2, **dadurch gekennzeichnet, dass** der Klemmkörper (91; 110) und der Widerlagerkörper (67) zum Klemmen einer Kupplungskugel (86) im Bereich ihres Äquatorialumfangs (99) ausgestaltet sind und/oder dass die Befestigungseinrichtung (16a-16d) mindestens eine Stütze (100) zum Abstützen an der Kupplungskugel (86), insbesondere an deren oberen Abflachung (87), aufweist

4. Lastenträger nach einem der vorhergehenden Ansprüche, **dadurch gekennzeichnet, dass** der Antriebsschalter (42) mindestens einen durch den Widerhalt betätigbaren Sensor (101: 102), zweckmäßigerweise mindestens zwei Sensoren (101: 102), umfasst, wobei der Halteantrieb (60a-60d) in Abhängigkeit von einem Abstand des mindestens einen Sensors (101: 102) von dem Widerhalt schaltbar ist, und/oder dass der Antriebsschalter (42) mindestens einen Bedienersensor, insbesondere einen Abstandssensor (55), zur Erfassung eines Bedieners oder einer Bedienhandlung des Bedieners umfasst.

5. Lastenträger nach einem der vorhergehenden Ansprüche, **dadurch gekennzeichnet, dass** der Halteantrieb (60a-60d) einen elektrischen und/oder fluidischen Linearantrieb und/oder einen elektrischen und/oder fluidischen Drehantrieb und/oder ein insbesondere selbsthemmendes Getriebe, insbesondere ein Spanngetriebe und/oder ein Klemmgetriebe und/oder ein Übertragungsgetriebe, aufweist.

6. Lastenträger nach einem der vorhergehenden Ansprüche, **dadurch gekennzeichnet, dass** das mindestens eine Halteglied (61a-61d) einen Riegel und/oder ein Formschlussglied zu einem Formschluss mit einer Formschlussgegenkontur des Widerhalts und/oder ein Spannelement und/oder mindestens eine Spannfläche und/oder mindestens eine Klemmfläche zum Verklemmen oder Verspannen des Lastenträgers (10a-10c) bezüglich des Widerhalts aufweist oder bildet.

7. Lastenträger nach einem der vorhergehenden Ansprüche, **dadurch gekennzeichnet, dass** das mindestens eine Halteglied (61a-61d) eine Riegelfläche und eine Spannfläche und/oder eine Klemmfläche aufweist, die bezogen auf eine Verriegelungsbewegung oder Entriegelungsbewegung des mindestens einen Halteglieds (61a-61d) benachbart, insbesondere nebeneinander, angeordnet sind und zur Zusammenwirkung mit einer Verrieglungsgegenkontur und einer insbesondere an der Verrieglungsgegenkontur vorgesehene Spanngegenkontur und/oder Klemmgegenkontur vorgesehen ist derart, dass bei der Verriegelungsbewegung zunächst die Riegelfläche und die Verrieglungsgegenkontur und dann die Spannfläche oder die Klemmfläche mit der Spanngegenkontur oder der Klemmgegenkontur in Eingriff miteinander gelangen.

8. Lastenträger nach einem der vorhergehenden Ansprüche, **dadurch gekennzeichnet, dass** das mindestens eine Halteglied (61a-61d) durch eine Federanordnung (105) in die Haltestellung oder die Freigabestellung belastet ist.

9. Lastenträger nach einem der vorhergehenden Ansprüche, **dadurch gekennzeichnet, dass** der Antriebsschalter (42) zur Anordnung in einem Außenbereich des Fahrzeug (80) ausgestaltet ist und/oder dass der Antriebsschalter (42) an dem Lastenträger (10a-10c), insbesondere hinter oder an einem Kennzeichenträger, angeordnet ist.

10. Lastenträger (10a-10c) nach einem der vorhergehenden Ansprüche, **dadurch gekennzeichnet, dass** er einen Empfänger (56) zur drahtlosen Ansteuerung des Antriebsschalters (42b) oder als Bestandteil des Antriebsschalters (42) aufweist, wobei der Empfänger (56) vorteilhaft einen im Wesentlichen auf die Umgebung des Lastenträgers (10a-10c), insbesondere auf 50cm bis 200cm, begrenzten Empfangsbereich (58) aufweist.

11. Lastenträger nach einem der vorhergehenden Ansprüche, **dadurch gekennzeichnet, dass** er eine Steuerung (52) aufweist, die den Halteantrieb (60a-60d) periodisch abhängig von einer Erstbetätigung durch den Antriebsschalter (42) in die Haltestellung oder in die Freigabestellung wiederholt zu einer Betätigung des mindestens einen Halteglieds (61a-61d) in die Haltestellung oder in die Freigabestellung mit Energie versorgt, insbesondere bestromt.

12. Lastenträger nach einem der vorhergehenden Ansprüche, **dadurch gekennzeichnet, dass** er eine Steuerung (52) zur Aktivschaltung und/oder Deaktivierung des Halteantriebs (60a-60d) und/oder des Antriebsschalters (42) anhand mindestens einer Aktivierungsbedingung aufweist.

13. Lastenträger nach einem der vorhergehenden Ansprüche, **dadurch gekennzeichnet, dass** er mindestens eine optische und/oder akustische Funktionsanzeigeeinrichtung für mindestens eine Funktionsanzeige der Befestigungseinrichtung aufweist und/oder mindestens einen Signalausgang zur Ansteuerung (52) einer Funktionsanzeigeeinrichtung des Fahrzeugs (80) aufweist.

14. Lastenträger-Kupplung für einen an einem Fahrzeug (80), insbesondere einem Personenkraftwagen, lösbar befestigbaren Lastenträger (10a-10c), der eine Tragbasis zum Tragen einer Last aufweist, wobei die Lastenträger-Kupplung eine Befestigungseinrichtung (16a-16d) zum lösbaren Befestigen an einem Widerhalt, insbesondere einer Anhängekupplung, des Kraftfahrzeugs (80) aufweist, wobei die Befestigungseinrichtung (16a-16d) mindestens ein Halteglied (61a-61d) aufweist, das zwischen einer zum Halten an dem Widerhalt vorgesehenen Haltestellung, und einer zum Entfernen der Befestigungseinrichtung (16a-16d) von dem Widerhalt vorgesehenen Freigabestellung verstellbar ist, **dadurch gekennzeichnet, dass** die Befestigungseinrichtung (16a-16d) mindestens einen mit einem Antriebsschalter (42) schaltbaren elektrischen und/oder fluidischen Halteantrieb (60a-60d) zum Antreiben des mindestens einen Halteglieds (61a-61d) aufweist.

15. Lastenträger-Kupplung nach Anspruch 14, **dadurch gekennzeichnet, dass** sie als zusammenwirkende Kupplungsteile mindestens eine insbesondere am Fahrzeug (80) angeordnete Steckaufnahme (121) und einen insbesondere am Lastenträger (10a-10c) angeordneten Steckvorsprung (140) zum Einstecken in die Steckaufnahme umfasst und/oder dass der Halteantrieb (60a-60d) am fahrzeugseitigen Kupplungsteil der Lastenträger-Kupplung oder am lastenträgerseitigen Kupplungsteil der Lastenträger-Kupplung angeordnet ist.
